# EUROPÄISCHE PATENTSCHRIFT

(11) **EP 3 394 459 B1**
(45) Veröffentlichungstag und Bekanntmachung des Hinweises auf die Patenterteilung: **25.09.2019**
(21) Anmeldenummer: 18710790.9
(22) Anmeldetag: 28.02.2018
(51) Int. Cl.: F16C 33/12, F16C 33/14, F16C 33/20, F16C 33/04

(54) **GLEITLAGERELEMENT UND VERFAHREN ZU DESSEN HERSTELLUNG**
SLIDING BEARING ELEMENT AND METHOD FOR PRODUCING SAME
ÉLÉMENT DE PALIER LISSE ET PROCÉDÉ DE FABRICATION ASSOCIÉ

(30) Priorität: 13.03.2017 DE 102017105304
(43) Veröffentlichungstag der Anmeldung: 31.10.2018
(73) Patentinhaber: KS Gleitlager GmbH, 68789 St. Leon-Rot (DE)
(72) Erfinder: WITT, Mario, 69120 Heidelberg (DE); REEPMEYER, Jens, 26789 Leer (DE); PUCHER, Klaus, 86157 Augsburg (DE)
(74) Vertreter: DREISS Patentanwälte PartG mbB
(86) Internationale Anmeldenummer: PCT/EP2018/054870
(87) Internationale Veröffentlichungsnummer: WO 2018/166791

(56) Entgegenhaltungen:
- EP-A1- 2 365 109
- DE-A1-102005 023 308

## Beschreibung

Die Erfindung betrifft ein Gleitlagerelement, insbesondere Radialgleitlagerelement oder Anlaufscheibe, insbesondere zur Lagerung der Kurbelwelle bei Verbrennungsmotoren, optional mit einer metallischen Stützschicht, insbesondere aus Stahl, und mit einer metallischen Trägerschicht auf Aluminium-Zinn-Basis und einer darauf aufgebrachten Laufschicht, wobei die Laufschicht eine Polymerschicht oder eine Galvanikschicht ist. Ein solches Gleitlagerelement ist aus der EP 2 365 109 A1 bekannt. Weiter betrifft die Erfindung ein Zwischenprodukt im Zuge der Herstellung eines Gleitlagerelements und ein Verfahren zur Herstellung des Zwischenprodukts und des Gleitlagerelements.

Bei Gleitlagerelementen der vorgenannten Art wurden im sogenannten Start-Stopp-Betrieb der Fahrzeuge bzw. ihrer Verbrennungsmotoren immer wieder Probleme hinsichtlich der Abrieb- oder Verschleißfestigkeit festgestellt, wobei beide Begriffe nachfolgend synonym verwendet werden.

Der vorliegenden Erfindung liegt demgemäß die Aufgabe zugrunde, die Verschleißfestigkeit bei hier in Rede stehenden Gleitlagerelementen zu verbessern.

Diese Aufgabe wird bei einem Gleitlagerelement erfindungsgemäß dadurch gelöst, dass eine Oberseite der metallischen Trägerschicht vor dem Aufbringen der Laufschicht derart gestrahlt wurde, dass sie eine sogenannte reduzierte Talhöhe S_{VK} von 0,5 - 1,5 µm und ein sogenanntes leeres Volumen der Täler V_{VV} von 0,06 - 0,16 µm³/µm² aufweist, und dass die Laufschicht auf die so behandelte Oberseite der Trägerschicht aufgebracht ist. Die reduzierte Talhöhe S_{VK} und das leere Volumen der Täler V_{VV} werden bestimmt nach DIN EN ISO 25178, Teil 2, 2012; dabei wird das leere Volumen der Täler V_{VV} bestimmt bei einem Materialanteil p von 80 %.

In entsprechender Weise wird die Aufgabe durch ein Zwischenprodukt mit den Merkmalen des Anspruchs 5 sowie durch ein Verfahren zur Herstellung des Gleitlagerelements bzw. des Zwischenprodukts mit den Merkmalen des Anspruchs 6 gelöst.

Mit der vorliegenden Erfindung wurde festgestellt, dass beim Starten des Motors im Zuge des Übergangs von Haftreibung zu Gleitreibung beträchtliche Scherkräfte im Kontaktbereich der Welle zur Laufschicht entstehen. Bei mit Start-Stopp-Betrieb ausgestatteten Fahrzeugen wirkt sich dies aufgrund der größeren Häufigkeit des Startens kritisch aus. In dieser Betriebsart ist die Verschleißfestigkeit der Laufschicht nicht nur durch deren Material- und Schichtparameter bestimmt, sondern für die Verschleißfestigkeit erweist sich die Verklammerung der Laufschicht zur Trägerschicht für die Aufnahme der Scherkräfte als sehr wesentlich. Es wurde nun erfindungsgemäß festgestellt, dass die beiden Parameter, nämlich die reduzierte Talhöhe und das leere Volumen der Täler, beide gemäß DIN EN ISO 25178, Teil 2, 2012, wesentliche Oberseiten- oder Oberflächenparameter zur Erzielung einer sich als vorteilhaft erweisenden Verklammerung der Laufschicht auf der Oberseite der Trägerschicht darstellen. Es wurde festgestellt, dass eine Vergrößerung der Täler, und zwar im Hinblick auf deren Tiefe und im Hinblick auf deren befüllbares Volumen zu einer Erhöhung und damit Verbesserung der Verschleißfestigkeit führt. Ferner wurde diesbezüglich aber ein Zielkonflikt ermittelt, und zwar dahingehend, dass mit einer Vergrößerung der beiden Parameter, d.h. mit einer Zunahme der Rauheit oder der Vergrößerung der funktionellen Aufrauung Probleme, und zwar in Form einer Abnahme der Fresslast, auftreten. Eine Zunahme der Rauheit bedingt eine Verringerung der Anpassungsfähigkeit und behindert den Aufbau einer guten Hydrodynamik, weil die aufgebrachte Laufschicht die Rauheit der Trägerschicht relativ gut nachbildet, also erhält und nicht etwa zu einem Großteil ausgleicht. Dies führt aber in Fresstests zur Erhöhung des Mischreibungsanteils und damit der Reibwärme, die bei und infolge zunehmender Rauheit und notleidender Hydrodynamik nicht rasch genug abgeführt werden kann. Mit der vorliegenden Erfindung wurde dieser Zielkonflikt erkannt und eine sich als vorteilhaft erweisende funktionale Oberseitengestaltung der Trägerschicht ermittelt, die eine gute Verklammerung der Laufschicht mit der Trägerschicht gestattet und sich auch im Start-Stopp-Betrieb bewährt. Dort kommt es nämlich jeweils beim Starten vermehrt zu einem Übergang von Haftreibung zu Gleitreibung, und damit zu den geschilderten kritischen Situationen. Durch eine bessere Verklammerung der Laufschicht mit der Trägerschicht werden diese kritischen Situationen aber entschärft.

Es wurde erkannt, dass die Parameter der reduzierten Talhöhe S_{VK} und des leeren Volumens der Täler V_{VV} funktionale Rauheitsparameter darstellen, welche auch Rückschlüsse auf das Schmierverhalten einer Oberseitentopologie gestatten. Eine Zunahme dieser funktionalen Rauheitsparameter bedeutet also einerseits eine bessere Verklammerung und damit eine Verbesserung der Verschleißfestigkeit, andererseits jedoch eine Verringerung der Anpassungsfähigkeit mit den dadurch bedingten Folgeproblemen. Basierend auf dieser Erkenntnis wurde der beanspruchte Parameterbereich dieser Parameter ermittelt.

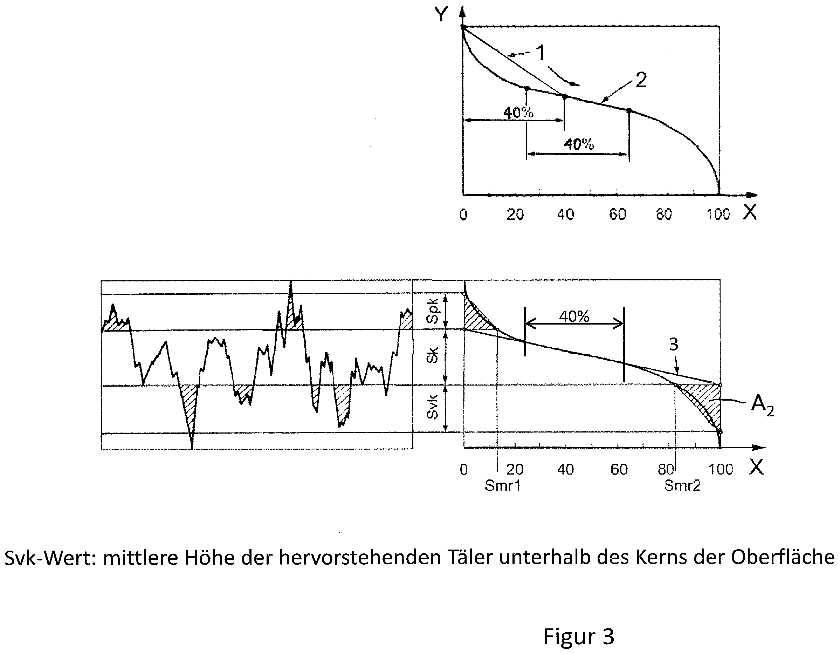

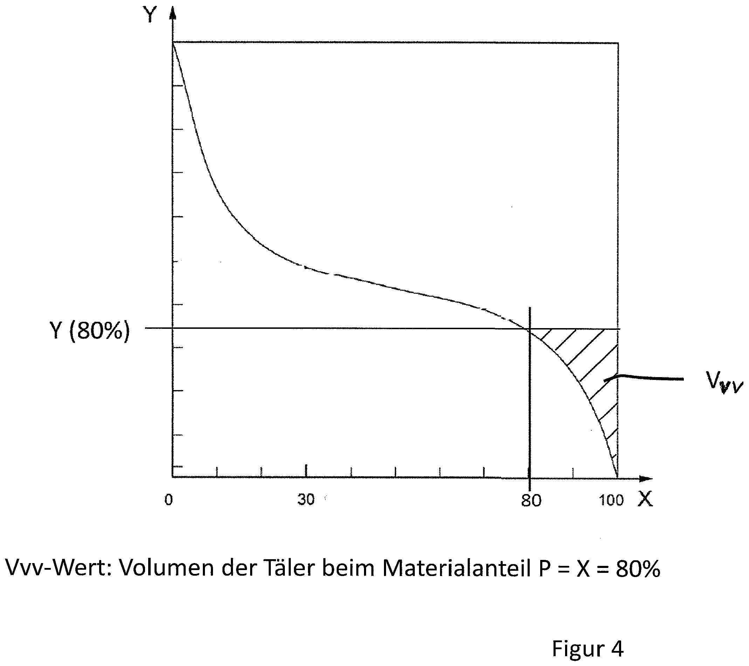

Die Figuren 3 und 4 verdeutlichen die Parameter der reduzierten Talhöhe S_{VK} und des leeren Volumens der Täler V_{VV}. Bei der reduzierten Talhöhe S_{VK} handelt es sich um die mittlere Höhe der hervorstehenden Täler unterhalb des sogenannten Kerns der Oberseite.

Die reduzierte Talhöhe S_{VK} ist gemäß DIN EN ISO 25178 Teil 2 wie in Figur 3 gezeigt definiert. Man ermittelt hierfür zunächst den Kern oder die Kernhöhe Sₖ der Topographie anhand einer Sekante bei einer Kurve, welche den flächenhaften Materialanteil X der Oberfläche als Funktion der Höhe oder Dicke Y darstellt, wie folgt: Man beginnt bei der maximalen Dicke oder Höhe Y, was also einen Materialanteil X von null entspricht, und zeichnet von dort eine Sekante 1 zu demjenigen Wert der Kurve, für den der Materialanteil X 40 % beträgt. Sodann wird diese Sekante, die einen Materialanteil von 40 % überfängt, in Richtung höherer Materialanteile verschoben, und zwar so lange bis ihre Steigung/Gradient den geringsten Wert annimmt, bevor sie also bei weiterer Verschiebung wieder steiler wird. Diese Lage der Sekante ist mit Bezugszeichen 2 in Figur 3 bezeichnet. In dieser Position wird diese Sekante 2 zu der Geraden 3 verlängert. Ihr Schnittpunkt mit der Y-Koordinatenachse bei X=0% und bei X=100 % bezeichnet den Kern bzw. die Kernhöhe Sk der Topographie. Die reduzierte Talhöhe S_{VK} ist nun die mittlere Höhe bzw. Tiefe der unterhalb des Kerns hervorstehenden bzw. sich nach unten erstreckenden Täler. S_{VK} wird gemäß DIN EN ISO 25178 Teil 2, 2012 Ziffer 5.3 ermittelt als die Höhe S_{VK} eines rechtwinkligen Dreiecks A₂, das so konstruiert wird, dass es die gleiche Fläche wie der "Talbereich", also die aufsummierte Fläche der Täler unterhalb des Kerns in Figur 3 hat. Dieses Dreieck A₂ hat also den Wert (100% - Sₘᵣ₂) als Basislänge und S_{VK} als Höhe.

Das leere Volumen der Täler V_{VV} ist aus Figur 4 ersichtlich, und zwar als integrierter Flächenanteil im dargestellten Bereich V_{VV}, wobei ein Materialanteil von X=80 % im Sinne der Norm DIN EN ISO 25178 Teil 2 zu Grunde gelegt wurde. 80 % Materialanteil bedeutet hierbei, dass bei einer Position in Dickenrichtung, also orthogonal zu der Oberseite, was in den Figuren 3, 4 der Y-Koordinatenrichtung entspricht, die projizierte Fläche der Täler (entspricht materialfrei) 20 % und der Materialanteil 80 % beträgt, wenn man die sich so ergebende Ebene oder Querschnittsfläche bei diesem Y-Wert in der Dickenrichtung oder Y-Koordinatenrichtung betrachtet. Das leere Volumen der Täler V_{VV} ist nun dasjenige materialfreie Volumen unterhalb dieser Ebene oder Querschnittsfläche, bezogen auf die Flächeneinheit, wie dies im Übrigen in der Norm DIN EN ISO 25178 Teil 2, 2012, angegeben ist.

Es sei noch darauf hingewiesen, dass bei einer Ausführungsform, bei der die Laufschicht eine Polymerschicht ist, diese Polymerschicht bei dem fertigen Gleitlagerelement durch ein geeignetes Lösemittel wieder abgelöst werden kann, so dass nach dem Ablösen die exakte Topographie der dann freiwerdenden strukturierten gestrahlten Oberseite der Trägerschicht durch einschlägige Messverfahren, typischerweise durch optische Verfahren erfasst und ausgewertet werden kann. Bei einer Ausführungsform, bei der die Laufschicht eine Galvanikschicht ist, kann diese Galvanikschicht in einem Ätzverfahren entfernt werden, so dass danach auf dieselbe Weise die Topographie der freiwerdenden strukturierten gestrahlten Oberseite der Trägerschicht ermittelt werden kann. Es wird auch darauf hingewiesen, dass in beiden Fällen diese Topographie der Oberseite bei der aufgebrachten Laufschicht überwiegend gut erhalten bleibt, so dass sie auch in diesem Fall direkt an der Laufschicht ermittelt werden kann.

Bei einem bevorzugten Gleitlagerelement ist die metallische Trägerschicht auf Aluminium-Zinn-Basis von einer AlSn(4-15)Si(1-6)-Legierung, insbesondere von einer AlSn(4-15)Si(2-6)-Legierung, insbesondere von einer AlSn(4-15)Si(2-5)-Legierung, insbesondere von einer AlSn(4-15) Si(2-4)-Legierung gebildet.

Es erweist sich als vorteilhaft, wenn die gestrahlte Oberseite der metallischen Trägerschicht eine sogenannte reduzierte Talhöhe S_{VK} von wenigstens 0,7 µm, insbesondere von wenigstens 0,9 µm und von höchstens 1,5 µm, insbesondere von höchstens 1,4 µm, insbesondere von höchstens 1,3 µm aufweist und ein sogenanntes leeres Volumen der Täler V_{VV} von wenigstens 0,08 µm³/µm², insbesondere von wenigstens 0,09 µm³/µm² und von höchstens 0,16 µm³/µm², insbesondere von höchstens 0,15 µm³/µm², insbesondere von höchstens 0,14 µm³/µm² aufweist.

Bei dem erfindungsgemäßen Verfahren zur Herstellung eines Gleitlagerelements oder eines Zwischenprodukts im Zuge der Herstellung eines Gleitlagerelements kann die Laufschicht bei einer Ausführungsform als Polymerschicht aufgesprüht, aufgewalzt oder aufextrudiert werden. Bei einer anderen Ausführungsform ist die Laufschicht als Galvanikschicht in einem galvanischen Prozess stromlos chemisch oder elektrochemisch aufgebracht.

Weiter erweist es sich als vorteilhaft, wenn die Trägerschicht im Gravitationsstrahlverfahren gestrahlt wird.

Dabei erweist es sich als vorteilhaft, wenn die Trägerschicht mit einem Strahldruck von 1,0 - 1,5 bar gestrahlt wird. Hierbei handelt es sich nicht um denjenigen Druck, den die strahlenden Partikel auf eine Auftrefffläche ausüben, sondern um den Druck unmittelbar vor der Strahldüse im Inneren der Strahlvorrichtung.

Weiter erweist es sich als vorteilhaft, wenn eine größte Abmessung eines Strahldüsenquerschnitts einer Strahldüse am Austritt 10-14 mm, insbesondere 11-13 mm, insbesondere 12 mm beträgt. Es erweist sich weiter als vorteilhaft, wenn ein Abstand eines Austritts einer Strahldüse von der Oberseite der zu strahlenden Trägerschicht des Gleitlagerelements 80-120 mm, insbesondere 90-110 mm, insbesondere 100 mm beträgt. Weiter erweist sie sich als vorteilhaft, wenn eine oder zwei oder drei Strahlvorrichtungen mit einer jeweiligen Strahldüse verwendet werden, die in Umfangsrichtung des Gleitlagerelements aufeinanderfolgend angeordnet sind.

Eine Vorschubgeschwindigkeit einer Strahldüse beträgt vorteilhafterweise 5 mm/s bis 60 mm/s, insbesondere 10 mm/s bis 60 mm/s, insbesondere 10 mm/s bis 50 mm/s wobei diese Vorschubgeschwindigkeit beim Strahlen von Radialgleitlagerelementen, insbesondere Gleitlagerschalen, in axialer Richtung also in Richtung der Lagerelementbreite gerichtet ist.

Schließlich erweist es sich als vorteilhaft, wenn die Trägerschicht mit einem Strahlmittel, insbesondere Korund, einer Partikelgröße von höchstens 100 µm gestrahlt wird, wobei wenigstens 60 Masse-% des Strahlmittels eine Partikelgröße von wenigstens 45 µm aufweist. Dies ist dann der Fall, wenn bei einer Siebung unter Verwendung eines Siebs mit einer Maschenweite von 100 µm kein Siebrückstand erhalten wird und bei Siebung unter Verwendung eines Siebs einer Maschenweite von 45 µm ein Siebrückstand von wenigstens 60 Masse-% erhalten wird. Weiter erweist es sich als vorteilhaft, wenn das Strahlmittel dabei eine Mooshärte von wenigstens 8 und insbesondere von 9 aufweist. Es umfasst vorzugsweise eine kantige Kornform, also nicht eine sphärisch oder knollig verrundete Kornform. Ein geeignetes Strahlmittel ist unter dem Handelsnamen Edelkorund EKF 220 der Firma Kuhmichel erhältlich.

Weitere Einzelheiten, Merkmale und Vorteile der Erfindung ergeben sich aus den beigefügten Patentansprüchen und der nachfolgenden Beschreibung und zeichnerischen Darstellung von Ausführungsformen der Erfindung. In der Zeichnung zeigt:
Figur 1 eine schematische Darstellung einer erfindungsgemäßen Radiallagerschale;
Figur 2 eine schematische Darstellung einer beispielhaften Anordnung von Strahldüsen bei der Herstellung einer erfindungsgemäßen Radiallagerschale;
Figur 3 eine grafische Darstellung einer Oberseitentopologie der erfindungsgemäß gestrahlten Trägerschicht zur Verdeutlichung und Ermittlung der reduzierten Talhöhe S_{VK};
Figur 4 eine grafische Darstellung einer Oberseitentopologie der erfindungsgemäß gestrahlten Trägerschicht zur Verdeutlichung des leeren Volumens der Täler V_{VV} bei einem Materialanteil von 80 %.

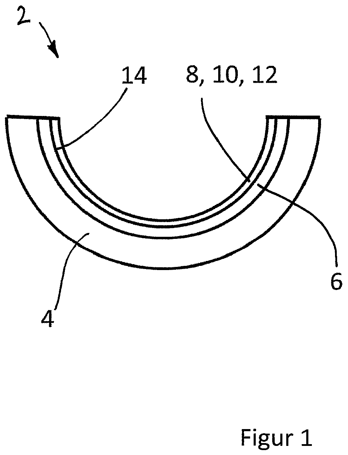

Figur 1 zeigt eine erfindungsgemäße Radiallagerschale 2, welche zur Lagerung der Kurbelwelle bei einem Verbrennungsmotor dient. Die nicht maßstabsgetreu dargestellte Radiallagerschale 2 umfasst im beispielhaft dargestellten Fall eine metallische Stützschicht 4 aus Stahl, eine darauf aufgebrachte Trägerschicht 6 auf Aluminium-Zinn-Basis und eine darauf aufgebrachte Laufschicht 8, bei der es sich um eine Polymerschicht 10 oder eine Galvanikschicht 12 handelt. Bevor die Laufschicht 8 auf die dem Gleitpartner zugewandte, also von der optionalen Stützschicht 4 abgewandte Oberseite 14 der Trägerschicht 6 aufgebracht wird, wird diese Oberseite 14 erfindungsgemäß derart gestrahlt, dass sie eine sogenannte reduzierte Talhöhe S_{VK} von 0,5 - 1,5 µm und ein sogenanntes leeres Volumen der Täler V_{VV} von 0,06 - 0,16 µm³/µm² aufweist (S_{VK} und V_{VV} bestimmt nach DIN EN ISO 25178, Teil 2, 2012; V_{VV} bestimmt bei einem Materialanteil p von 80 %). Die durch den Strahlvorgang erzeugte Oberflächentopographie bei der Trägerschicht 6 ist in der Figur 1 jedoch nicht ersichtlich, da es sich hierbei um eine Mikrostrukturierung handelt. Die Laufschicht 8 wird dann auf die so behandelte Oberseite 14 der Trägerschicht 6 aufgebracht.

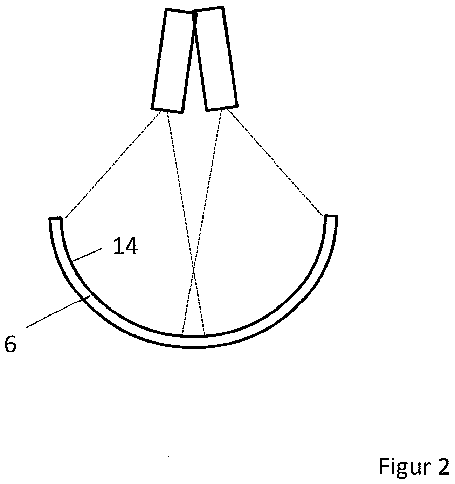

Figur 2 zeigt ebenfalls schematisch eine bevorzugte Anordnung von Strahldüsen beim Strahlen der Oberseite 14 der Trägerschicht 6 einer Radiallagerschale. Die Vorschubbewegung der Strahldüsen erfolgt im dargestellten Fall in axialer Richtung der Radiallagerschale, also senkrecht zur Zeichnungsebene.

Im Sinne der vorliegenden Erfindung bildet die erfindungsgemäß gestrahlte Trägerschicht 6, insbesondere im Verbund mit der optionalen Stützschicht 4, ein Zwischenprodukt im Zuge der Herstellung des Gleitlagerelements 2.

## Patentansprüche

1. Gleitlagerelement (2), insbesondere Radialgleitlagerelement oder Anlaufscheibe, insbesondere zur Lagerung der Kurbelwelle bei Verbrennungsmotoren, optional mit einer metallischen Stützschicht (4), insbesondere aus Stahl, und mit einer metallischen Trägerschicht (6) auf Aluminium-Zinn-Basis und einer darauf aufgebrachten Laufschicht (8), wobei die Laufschicht (8) eine Polymerschicht (10) oder eine Galvanikschicht (12) ist, **dadurch gekennzeichnet, dass** eine Oberseite (14) der metallischen Trägerschicht (6) vor dem Aufbringen der Laufschicht (8) derart gestrahlt wurde, dass sie eine sogenannte reduzierte Talhöhe S_{VK} von 0,5 - 1,5 µm und ein sogenanntes leeres Volumen der Täler V_{VV} von 0,06 - 0,16 µm³/µm² aufweist (S_{VK}, V_{VV} bestimmt nach DIN EN ISO 25178, Teil 2, 2012; V_{VV} bestimmt bei einem Materialanteil p von 80 %), und die Laufschicht (8) auf die so behandelte Oberseite (14) der Trägerschicht (6) aufgebracht ist.

2. Gleitlagerelement (2) nach Anspruch 1, **dadurch gekennzeichnet, dass** die Schichtdicke der Laufschicht 4 - 20 µm, insbesondere 4 - 15 µm beträgt.

3. Gleitlagerelement (2) nach Anspruch 1 oder 2, **dadurch gekennzeichnet, dass** die metallische Trägerschicht (6) auf Aluminium-Zinn-Basis von einer AlSn(4-15)Si(1-6)-Legierung, insbesondere von einer AlSn (4-15) Si (2-6)-Legierung, insbesondere von einer AlSn(4-15)Si(2-5)-Legierung, insbesondere von einer AlSn(4-15)Si(2-4)-Legierung gebildet ist.

4. Gleitlagerelement (2) nach Anspruch 1, 2 oder 3, **dadurch gekennzeichnet, dass** die gestrahlte Oberseite (14) der metallischen Trägerschicht (6) eine sogenannte reduzierte Talhöhe S_{VK} von wenigstens 0,7 µm, insbesondere von wenigstens 0,9 µm und von höchstens 1,5 µm, insbesondere von höchstens 1,4 µm, insbesondere von höchstens 1,3 µm aufweist und ein sogenanntes leeres Volumen der Täler V_{VV} von wenigstens 0,08 µm³/µm², insbesondere von wenigstens 0,09 µm³/µm² und von höchstens 0,16 µm³/µm², insbesondere von höchstens 0,15 µm³/µm², insbesondere von höchstens 0,14 µm³/µm² aufweist.

5. Zwischenprodukt im Zuge der Herstellung eines Gleitlagerelements (2), insbesondere eines Radialgleitlagerelements oder einer Anlaufscheibe, insbesondere zur Lagerung der Kurbelwelle bei Verbrennungsmotoren, optional mit einer metallischen Stützschicht (4), insbesondere aus Stahl, und mit einer metallischen Trägerschicht (6) auf Aluminium-Zinn-Basis, wobei die Trägerschicht (6) eine Oberseite (14) zur Aufbringung einer dem Gleitpartner zugewandten Laufschicht (8) aufweist, wobei die Laufschicht (8) eine Polymerschicht (10) oder eine Galvanikschicht (12) ist, wobei das Zwischenprodukt ausgehend von einem Flachmaterial auf die Gestalt des herzustellenden Gleitlagerelements (2) gebracht ist, **dadurch gekennzeichnet, dass** die Oberseite (14) der metallischen Trägerschicht (6) des auf die Gestalt des herzustellenden Gleitlagerelements (2) gebrachten Zwischenprodukts derart gestrahlt wurde, dass sie eine sogenannte reduzierte Talhöhe S_{VK} von 0,5 - 1,5 µm und ein sogenanntes leeres Volumen der Täler V_{VV} von 0,06 - 0,16 µm³/µm² aufweist (S_{VK}, V_{VV} bestimmt nach DIN EN ISO 25178, Teil 2, 2012; V_{VV} bestimmt bei einem Materialanteil p von 80 %), damit die Laufschicht (8) in einem anschließenden Verfahrensschritt auf die so behandelte Oberseite (14) der Trägerschicht (6) aufgebracht werden kann.

6. Verfahren zum Herstellen eines Gleitlagerelements nach Anspruch 1, 2, 3 oder 4, insbesondere eines Radialgleitlagerelements oder einer Anlaufscheibe, insbesondere zur Lagerung der Kurbelwelle bei Verbrennungsmotoren, oder eines Zwischenprodukts im Zuge der Herstellung eines Gleitlagerelements nach Anspruch 5, optional mit einer metallischen Stützschicht, insbesondere aus Stahl, und mit einer metallischen Trägerschicht auf Aluminium-Zinn-Basis und einer darauf aufgebrachten Laufschicht, wobei die Laufschicht eine Galvanikschicht oder eine Polymerschicht ist, **dadurch gekennzeichnet, dass** die Trägerschicht oder der optionale Verbund aus metallischer Stützschicht und Trägerschicht auf die Gestalt des herzustellenden Gleitlagerelements oder des Zwischenprodukts hierfür gebracht wird, dass danach eine Oberseite der metallischen Trägerschicht vor dem Aufbringen der Laufschicht derart gestrahlt wird, dass sie eine sogenannte reduzierte Talhöhe S_{VK} von 0,5 - 1,5 µm und ein sogenanntes leeres Volumen der Täler V_{VV} von 0,06 - 0,16 µm³/µm² aufweist, und die Laufschicht auf die so behandelte Oberseite der Trägerschicht aufgebracht wird.

7. Verfahren nach Anspruch 6, **dadurch gekennzeichnet, dass** die Laufschicht (8) als Polymerschicht (10) aufgesprüht, aufgewalzt oder aufextrudiert wird.

8. Verfahren nach Anspruch 6, **dadurch gekennzeichnet, dass** die Laufschicht (8) als galvanische Schicht (12) in einem galvanischen Prozess stromlos chemisch oder elektrochemisch aufgebracht wird.

9. Verfahren nach Anspruch 6, 7 oder 8, **dadurch gekennzeichnet, dass** die Trägerschicht (6) im Gravitationsstrahlverfahren gestrahlt wird.

10. Verfahren nach einem oder mehreren der Ansprüche 6-9, **dadurch gekennzeichnet, dass** die Trägerschicht (6) mit einem Strahldruck von 100.000-150.000 Pa (1,0-1,5 bar) gestrahlt wird.

11. Verfahren nach einem oder mehreren der Ansprüche 6-10, **dadurch gekennzeichnet, dass** eine größte Abmessung eines Strahldüsenquerschnitts einer Strahldüse am Austritt 10-14 mm, insbesondere 11-13 mm, insbesondere 12 mm beträgt.

12. Verfahren nach einem oder mehreren der Ansprüche 6-11, **dadurch gekennzeichnet, dass** ein Abstand eines Austritts einer Strahldüse von der Oberseite der zu strahlenden Trägerschicht des Gleitlagerelements 80-120 mm, insbesondere 90-110 mm, insbesondere 100 mm beträgt.

13. Verfahren nach einem oder mehreren der Ansprüche 6-12, **dadurch gekennzeichnet, dass** eine oder zwei oder drei Strahlvorrichtungen mit einer jeweiligen Strahldüse verwendet werden, die in Umfangsrichtung des Gleitlagerelements aufeinanderfolgend angeordnet sind.

14. Verfahren nach einem oder mehreren der Ansprüche 6-13, **dadurch gekennzeichnet, dass** eine Vorschubgeschwindigkeit einer Strahldüse in axialer Richtung des Gleitlagerelements 5 mm/s bis 60 mm/s, insbesondere 10 mm/s bis 60 mm/s, insbesondere 10 mm/s bis 50 mm/s beträgt.

15. Verfahren nach einem oder mehreren der Ansprüche 6-14, **dadurch gekennzeichnet, dass** die Trägerschicht (6) mit einem Strahlmittel, insbesondere Korund, einer Partikelgröße von höchstens 100 µm gestrahlt wird, wobei wenigstens 60 Masse-% des Strahlmittels eine Partikelgröße von wenigstens 45 µm aufweist.

## Claims

1. Sliding bearing element (2), in particular radial sliding bearing element or thrust washer, in particular for bearing mounting the crankshaft in combustion engines, optionally with a metallic backing layer (4), in particular of steel, and with a metallic, aluminium-tin-based supporting layer (6) and an overlay (8) applied thereto, the overlay (8) being a polymer layer (10) or a plated layer (12), **characterised in that** the top (14) of the metallic supporting layer (6) was blasted prior to application of the overlay (8) in such a way that it has a "reduced valley depth" S_{VK} of 0.5 - 1.5 µm and a "dale void volume" V_{VV} of 0.06 - 0.16 µm³/µm² (S_{VK}, V_{VV} determined to DIN EN ISO 25178, Part 2, 2012; V_{VV} determined with a material content p of 80 %), and the overlay (8) is applied to the top (14), treated in this way, of the supporting layer (6).

2. Sliding bearing element (2) according to claim 1, **characterised in that** the layer thickness of the overlay amounts to 4 - 20 µm, in particular 4 - 15 µm.

3. Sliding bearing element (2) according to claim 1 or 2, **characterised in that** the metallic, aluminium-tin-based supporting layer (6) is formed of an AlSn(4-15)Si(1-6) alloy, in particular of an AlSn(4-15)Si(2-6) alloy, in particular of an AlSn(4-15)Si(2-5) alloy, in particular of an AlSn(4-15)Si(2-4) alloy.

4. Sliding bearing element (2) according to claim 1, 2 or 3, **characterised in that** the blasted top (14) of the metallic supporting layer (6) has a "reduced valley depth" S_{VK} of at least 0.7 µm, in particular of at least 0.9 µm and of at most 1.5 µm, in particular of at most 1.4 µm, in particular of at most 1.3 µm and a " dale void volume" V_{VV} of at least 0.08 µm³/µm², in particular of at least 0.09 µm³/µm² and of at most 0.16 µm³/µm², in particular of at most 0.15 µm³/µm², in particular of at most 0.14 µm³/µm².

5. An intermediate produced in the course of production of a sliding bearing element (2), in particular a radial sliding bearing element or a thrust washer, in particular for bearing mounting the crankshaft in combustion engines, optionally with a metallic backing layer (4), in particular of steel, and with a metallic, aluminium-tin-based supporting layer (6), the supporting layer (6) having a top (14) for application of an overlay (8) facing the sliding partner, the overlay (8) being a polymer layer (10) or a plated layer (12) and, starting from a flat material, the intermediate being brought into the shape of the sliding bearing element (2) to be produced, **characterised in that** the top (14) of the metallic supporting layer (6) of the intermediate brought into the shape of the sliding bearing element (2) to be produced was blasted in such a way that it has a "reduced valley depth" S_{VK} of 0.5 - 1.5 µm and a " dale void volume" V_{VV} of 0.06 - 0.16 µm³/µm² (S_{VK}, V_{VV} determined to DIN EN ISO 25178, Part 2, 2012; V_{VV} determined with a material content p of 80 %), so that the overlay (8) can be applied in a subsequent method step to the top (14), treated in this way, of the supporting layer (6).

6. Method for producing a sliding bearing element according to claim 1, 2, 3 or 4, in particular a radial sliding bearing element or a thrust washer, in particular for bearing mounting the crankshaft in combustion engines, or an intermediate according to claim 5 produced in the course of production of a sliding bearing element, optionally with a metallic backing layer, in particular of steel, and with a metallic, aluminium-tin-based supporting layer and an overlay applied thereto, the overlay being a plated layer or a polymer layer, **characterised in that** the supporting layer or the composite of optional metallic backing layer and supporting layer is brought into the shape of the sliding bearing element to be produced or of the intermediate therefor and **in that** thereafter, prior to application of the overlay, the top of the metallic supporting layer is blasted in such a way that it has a "reduced valley depth" S_{VK} of 0.5 - 1.5 µm and a "dale void volume" V_{VV} of 0.06 - 0.16 µm³/µm², and the overlay is applied to the top, treated in this way, of the supporting layer.

7. Method according to claim 6, **characterised in that** the overlay (8) is sprayed, rolled or extruded on as a polymer layer (10).

8. Method according to claim 6, **characterised in that** the overlay (8) is applied as a plated layer (12) using an electroless chemical or electrochemical plating process.

9. Method according to claim 6, 7 or 8, **characterised in that** the supporting layer (6) is blasted using the gravity blasting method.

10. Method according to one or more of claims 6 - 9, **characterised in that** the supporting layer (6) is blasted with a blasting pressure of 100,000 - 150,000 Pa (1.0 - 1.5 bar).

11. Method according to one or more of claims 6 - 10, **characterised in that** the maximum size of a blasting nozzle cross-section amounts to 10 - 14 mm at the outlet, in particular 11 - 13 mm, in particular 12 mm.

12. Method according to one or more of claims 6 - 11, **characterised in that** the distance of an outlet of a blasting nozzle from the top of the supporting layer to be blasted of the sliding bearing element amounts to 80 - 120 mm, in particular 90 - 110 mm, in particular 100 mm.

13. Method according to one or more of claims 6 - 12, **characterised in that** one or two or three blasting devices with a respective blasting nozzle are used, which are arranged in succession in the circumferential direction of the sliding bearing element.

14. Method according to one or more of claims 6 - 13, **characterised in that** a feed rate of a blasting nozzle in the axial direction of the sliding bearing element amounts to 5 mm/s to 60 mm/s, in particular 10 mm/s to 60 mm/s, in particular 10 mm/s to 50 mm/s.

15. Method according to one or more of claims 6 - 14, **characterised in that** the supporting layer (6) is blasted with a blasting medium, in particular corundum, with a particle size of at most 100 µm, at least 60 mass% of the blasting medium having a particle size of at least 45 µm.

## Revendications

1. Elément de palier lisse (2), en particulier un élément de palier lisse radial ou un disque de démarrage, en particulier pour le montage du vilebrequin dans des moteurs à combustion interne, facultativement avec une couche de protection métallique (4), en particulier en acier, et avec une couche de support métallique (6) à base d'aluminium-étain et une couche de roulement appliquée (8) sur celle-ci, dans lequel la couche de roulement (8) est une couche de polymère (10) ou une couche galvanique (12), **caractérisé en ce qu'**un côté supérieur (14) de la couche de support métallique (6) a été irradié avant l'application de la couche de roulement (8) de manière à présenter une hauteur dite de vallée réduite S_{VK} de 0,5 à 1,5 µm et un volume dit vide des vallées V_{VV} de 0,06 à 0,16 µm³/µm² (S_{VK}, V_{VV} déterminée selon DIN EN ISO 25178, partie 2, 2012; V_{VV}, déterminé à une teneur en matériau p de 80 %), et la couche de roulement (8) est appliquée sur le côté supérieur ainsi traité (14) de la couche de support (6).

2. Elément de palier lisse (2) selon la revendication 1, **caractérisé en ce que** l'épaisseur de couche de la couche de roulement est de 4 à 20 µm, en particulier de 4 à 15 µm.

3. Elément de palier lisse (2) selon la revendication 1 ou 2, **caractérisé en ce que** la couche de support métallique (6) à base d'aluminium-étain est formée d'un alliage AlSn(4-15)Si(1-6), en particulier d'un alliage AlSn(4-15)Si(2-6), en particulier d'un alliage AlSn(4-15)Si(2-5), en particulier d'un alliage AlSn(4-15)Si(2-4).

4. Elément de palier lisse (2) selon la revendication 1, 2 ou 3, **caractérisé en ce que** le côté supérieur irradié (14) de la couche de support métallique (6) présente une hauteur dite de vallée réduite S_{VK} d'au moins 0,7 µm, en particulier d'au moins 0,9 µm et d'au plus 1,5 µm, en particulier d'au plus 1,4 µm, en particulier d'au plus 1,3 µm, et présente un volume dit vide des vallées V_{VV} d'au moins 0,08 µm³/µm², en particulier d'au moins 0,09 µm³/µm² et d'au plus 0,16 µm³/µm², en particulier d'au plus 0,15 µm³/µm², en particulier d'au plus 0,14 µm³/µm².

5. Produit intermédiaire lors de la fabrication d'un élément de palier lisse (2), en particulier d'un élément de palier lisse radial ou d'un un disque de démarrage, en particulier pour le montage du vilebrequin dans des moteurs à combustion interne, facultativement avec une couche de protection métallique (4), en particulier en acier, et avec une couche de support métallique (6) à base d'aluminium-étain, dans lequel la couche de support (6) présente un côté supérieur (14) pour appliquer une couche de roulement (8) faisant face au partenaire de glissement, dans lequel la couche de roulement (8) est une couche de polymère (10) ou une couche galvanique (12), dans lequel le produit intermédiaire est fabriqué à partir d'un matériau plat sur la forme de l'élément de palier lisse (2) à fabriquer, **caractérisé en ce que** le côté supérieur (14) de la couche de support métallique (6) du produit intermédiaire fabriqué sur la forme de l'élément de palier lisse (2) à fabriquer a été irradié de manière à présenter une hauteur dite de vallée réduite S_{VK} de 0,5 à 1,5 µm et un volume dit vide des vallées V_{VV} de 0,06 à 0,16 µm³/µm² (S_{VK}, V_{VV} déterminée selon DIN EN ISO 25178, partie 2, 2012; V_{VV}, déterminé à une teneur en matériau p de 80 %), de sorte que la couche de roulement (8) peut être appliquée dans une étape de procédé ultérieure sur le côté supérieur (14) ainsi traité de la couche de support (6).

6. Procédé de fabrication d'un élément de palier lisse selon la revendication 1, 2, 3 ou 4, en particulier d'un élément de palier lisse radial ou d'un disque de démarrage, en particulier pour le montage du vilebrequin dans des moteurs à combustion interne, ou d'un produit intermédiaire lors de la fabrication d'un élément de palier lisse selon la revendication 5, facultativement avec une couche de protection métallique, en particulier en acier, et avec une couche de support métallique à base d'aluminium-étain et une couche de roulement appliquée sur celle-ci, dans lequel la couche de roulement est une couche galvanique ou une couche de polymère, **caractérisé en ce que** la couche de support ou le composite facultatif composé de la couche de protection métallique et de la couche de support est adapté à la forme de l'élément de palier lisse ou du produit intermédiaire à fabriquer, **en ce qu'**ensuite un côté supérieur de la couche de support métallique avant l'application de la couche de roulement est irradié, de manière à présenter une hauteur dite de vallée réduite S_{VK} de 0,5 à 1,5 µm et un volume dit vide des vallées V_{VV} compris entre 0,06 et 0,16 µm³/µm², et la couche de roulement est appliquée sur le côté supérieur ainsi traité de la couche de support.

7. Procédé selon la revendication 6, **caractérisé en ce que** la couche de roulement (8) est pulvérisée, laminée ou extrudée en tant que couche de polymère (10).

8. Procédé selon la revendication 6, **caractérisé en ce que** la couche de glissement (8) est appliquée en tant que couche galvanique (12) dans un processus galvanique sans flux chimique ou électrochimique.

9. Procédé selon la revendication 6, 7 ou 8, **caractérisé en ce que** la couche de support (6) est irradiée par un procédé de faisceau gravitationnel.

10. Procédé selon une ou plusieurs des revendications 6 à 9, **caractérisé en ce que** la couche de support (6) est irradiée à une pression de faisceau comprise entre 100 000 et 150 000 Pa (1,0 à 1,5 bar).

11. Procédé selon une ou plusieurs des revendications 6 à 10, **caractérisé en ce qu'**une dimension maximum d'une section transversale de buse de projection, à la sortie, est de 10 à 14 mm, en particulier de 11 à 13 mm, en particulier de 12 mm.

12. Procédé selon une ou plusieurs des revendications 6 à 11, **caractérisé en ce qu'**une distance d'une sortie d'une buse de projection depuis le côté supérieur de la couche de support à irradier de l'élément de palier lisse est de 80 à 120 mm, en particulier de 90 à 110 mm, en particulier de 100 mm.

13. Procédé selon une ou plusieurs des revendications 6 à 12, **caractérisé en ce qu'**un ou deux ou trois dispositifs de projection sont utilisés avec une buse de projection respective, qui sont agencées successivement dans une direction circonférentielle de l'élément de palier lisse.

14. Procédé selon une ou plusieurs des revendications 6 à 13, **caractérisé en ce qu'**une vitesse d'avance d'une buse de projection dans une direction axiale de l'élément de palier lisse est comprise entre 5 mm/s et 60 mm/s, en particulier entre 10 mm/s et 60 mm/s et en particulier entre 10 mm/s et 50 mm/s.

15. Procédé selon une ou plusieurs des revendications 6 à 14, **caractérisé en ce que** la couche support (6) est irradiée avec un moyen de projection, en particulier un corindon, présente une taille de particule d'au plus 100 µm, dans lequel au moins 60 % en masse du moyen de projection présente une taille de particule d'au moins 45 µm.
